# EUROPEAN PATENT SPECIFICATION

(11) **EP 3 351 441 B1**
(45) Date of publication and mention of the grant of the patent: **20.02.2019**
(21) Application number: 18152663.3
(22) Date of filing: 21.01.2018
(51) Int. Cl.: B60T 7/22, B60W 30/09

(54) **DEVICE FOR INCREASED SAFETY DURING SLOW VEHICLE MOVEMENT**
GERÄT FÜR ERHÖHUNG DER SICHERHEIT BEIM RANGIEREN EINES FAHRZEUGS
DISPOSITIF POUR AMELIORER LA SECURITE LORS DE MANOEUVRE D'UN VEHICULE

(30) Priority: 24.01.2017 CZ 20170034
(43) Date of publication of application: 25.07.2018
(73) Proprietor: CVUT v Praze, 16627 Praha 6 (CZ)
(72) Inventor: HOLUB, Jan, 25301 Hostivice (CZ); SVATOS, Jakub, 13000 Praha 3 (CZ)
(74) Representative: Kratochvil, Vaclav

(56) References cited:
- EP-A2- 1 843 174
- WO-A1-96/14591
- WO-A1-2017/002548

## Description

### Background of the Invention

The presented solution deals with a device which increases the safety of vehicle operation, especially when reversing on parking lots, in underground garages, at construction sites and similar.

### Description of Prior Art

During reversing, for example when passenger cars reverse in supermarket car parks or when trucks reverse on construction sites, each year a large number of people, often even small children, are hit and frequently killed worldwide. Every year more people in the world die this way than, for example, in aviation disasters. In a considerable number of cases, the fault cannot be explicitly attributed to the driver because a person with short stature is cannot be seen behind the vehicle before it starts moving either directly through the windows or in the rear-view mirrors.

Most vehicles are equipped with ultrasonic sensors to facilitate parking. The signal of these sensors, most commonly located in the bumper in the rear or possibly the front part of the vehicle, provides information for the evaluation unit about the presence and usually also the distance of the obstacle and this unit transmits this information by means of the optical and/or acoustic signals to the vehicle driver. During reversing, it indicates for example the distance to a car parked behind the reversing vehicle or to other obstacle. If a pedestrian enters behind the vehicle from the side, or in worse case, if a child runs in behind the vehicle from the side, the driver brakes with delay and this response delay is a sum of the technical delay of the obstacle detection by the sensor system, of the driver's reaction time, and of the time the driver needs for the braking action - moving the foot from the accelerator pedal to the brake pedal, depressing the clutch and the like. Vehicle brakes are activated only after this combined delay. The sum of these delays is in the order of hundreds of ms and can easily exceed 1s. During such time, a vehicle moving at a speed of 5km/h, which is the walking speed, travels about 1.4m, and this can lead, and in practice often leads, to hitting an obstacle, often a pedestrian.

At present, there are dozens of patents on the principle of ultrasonic sensors and their use in the automotive industry.

Patent DE102008027970 describes the use of a set of ultrasonic sensors for distance measurement during parking a vehicle, their design and location of individual sensors. However, the solution does not address the option to directly link the sensors to the control elements of the vehicle without driver's participation.

Document EP 2320225 describes a method for implementing and calibrating a set of ultrasonic sensors into a microprocessor system. It is an arrangement of two ultrasonic sensors positioned one against the other so that the signals are transmitted from one of the ultrasonic sensors to the other sensor. The resonance frequency of the sensors that are connected to the common control unit is measured. Sensor transmission frequencies are detected by a control unit where the transmitting frequencies are similar to resonance frequencies. The sensors are equipped with an element allowing to adjust the resonance frequency. The solution also includes a device for measuring the distance of a motor vehicle from the object. Based on the known ultrasound propagation speed in the air, the measurement of the distance is done indirectly by measuring the time needed for the signal to travel between the sensors. Neither this document mentions direct interconnection of the sensor system with the vehicle control systems.

Another document, US8014921, dealing with the use of an ultrasonic detector for detecting an approaching side collision with a vehicle moving in the same direction, is also known. If the system of sensors detects an obstacle in this case, the car's safety systems are activated, such as the seatbelt pretensioners, and the airbags unlock, but there is no direct intervention in the control of the car, i.e. braking.

WO2017005636 describes a device with ultrasonic sensors with piezoelectric elements for motor vehicles and deals with a new arrangement of the piezoelectric element as such within the ultrasonic sensor.

The important aspect is that none of the existing documents mentions the option of a direct connection of the ultrasonic sensor system with the vehicle control unit, which would allow to brake the vehicle automatically during its slow movement. Exceptions include patents related to automatic or assisted parking, such as US 8712642, which describes the possibility of blocking the assisted or automatic parking functions in the event that one or more sensors are blinded, for example, by the sliding door of the vehicle. Most existing solutions only signal the information about the obstacle encountered to the driver, but the driver himself has to perform the braking action, while the speed of processing the information obtained by the driver and the time needed for the vehicle to stop are essential. The driver's braking action delay is made up of the technical delay of obstacle detection by the sensor system, the reaction time of the driver, and the time the driver needs to brake, i.e. to move the foot from the accelerator pedal to the brake pedal, depress the clutch and the like. Vehicle braking process activates only after this combined delay. The sum of these delays is in the order of hundreds of ms and can easily exceed 1s. During such time, a vehicle moving at a speed of 5km/h, which is the walking speed, travels about 1.4m, and this can lead, and in practice often leads, to hitting an obstacle, often a pedestrian.

### Summary of the Invention

The drawbacks mentioned above are removed by the present device for increased safety during slow vehicle movement. The device consists of ultrasonic sensors interconnected with a signal processing block, to which a block of optical and/or acoustic signaling is connected. The device further comprises a control unit controlling the brake circuit and the engine. The principle of the new solution is that an interconnecting block is inserted between the signal processing block and the control unit. The interconnecting block is formed by the memory, the block for detection of moving obstacles, the block for detection of moving obstacles, the block for detection of imminent obstacle during the vehicle slow movement, the temporary deactivation block, and the block for automatic braking. Mentioned blocks are interconnected in such a way that the output of the signal processing block from the ultrasonic sensors is connected to the input of the memory, to the first input of the block for detection of moving obstacles, and to the first input of the block for detection of imminent obstacle during the vehicle slow movement. The output of the memory is connected to the second input of the block for detection of moving obstacles while its third input is connected to the output of the information about the current wheels rotations from the control unit. This output is simultaneously connected to the second input of the block for detection of imminent obstacle during the vehicle slow movement. The output of the block for detection of moving obstacles is connected to the first input of the automatic braking block. To the second input of the automatic braking block the output of the block for detection of moving obstacles during the vehicle slow movement is connected and to the third input of the automatic braking block the output of the block for detection of imminent obstacle during the vehicle slow movement is connected. The input of the temporary deactivation block is interconnected with the output of the information about temporary deactivation of the interconnecting block function from the control unit. The output of the automatic braking block is interconnected with the input for control of the braking circuit by the control unit.

The advantage of the aforementioned device is that it can prevent most collisions with pedestrians that happen during slow vehicle movement. The system can be equipped with a function for intentional temporary deactivation by the driver, for example when the vehicle moves in an environment possibly triggering false alarms, such as tall grass. It is however suitable to limit such deactivation by the driver to certain time only, for instance until the engine is stopped, and re-activate the function at next start of the engine.

### Explanation of Drawings

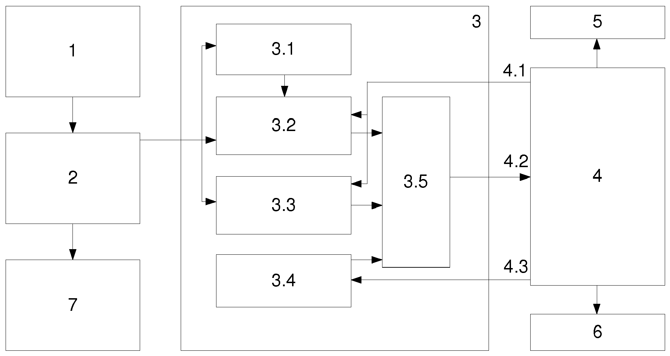

Example of the device for increased safety during slow vehicle movement according to the present solution is schematically shown in the attached drawing.

### Detailed Description of the Preferred Embodiments

The device for increased safety during slow vehicle movement consists of ultrasonic sensors 1, which are interconnected with the signal processing block 2. To the signal processing block 2 the block 7 of the optical and/or acoustic signaling is connected. The output of the signal processing block 2 is via the interconnecting block 3 interconnected with the control unit 4 for controlling the braking circuit 5 and the engine 6. The interconnecting block 3 consists of the memory 3.1, the block 3.2 for detection of moving obstacles, the block 3.3 for detection of imminent obstacle during the vehicle slow movement, the temporary deactivation block 3.4, and the automatic braking block 3.5. These blocks are interconnected as follows. The output of the block 2 processing the signal from the ultrasonic sensors 1 is connected to the input of the memory 3.1, to the first input of the block 3.2 for detection of moving obstacles, and to the first input of the block 3.3 for detection of imminent obstacle during the vehicle slow movement. The output of the memory 3.1 is connected to the second input of the block 3.2 for detection of moving obstacles while the third input of the block 3.2 for detection of moving obstacles is connected to the output 4.1of the information about the current wheels rotations from the control unit 4, which is simultaneously connected to the second input of the block 3.3 for detection of imminent obstacle during the vehicle slow movement. The output of the block 3.2 for detection of moving obstacles is connected to the first input of the automatic braking block 3.5. To the second input of the automatic braking block 3.5 the output of the block 3.3 for detection of imminent obstacle during the vehicle slow movement is connected and to the third input of the automatic braking block 3.5 the output of the temporary deactivation block 3.4 is connected. The input of the temporary deactivation block 3.4 is connected to the output 4.3 of the information about temporary deactivation of the interconnecting block 3 function from the control unit 4. The output of the automatic braking block 3.5 is connected to the input 4.2 for controlling the braking circuit by the control unit 4.

The block 3.2 for detection of moving obstacles processes the information about the vehicle movement, i.e. the wheels rotation, from the control unit 4 and simultaneously the information about changes of the obstacle distance and position in time by means of the current output of the block 2 processing the signal from the ultrasonic sensors 1 and its previous output values stored in the memory 3.1. The memory 3.1 stores the positions of the obstacle in recent time, which is tens or hundreds ms. If the vehicle is not moving and the values in the memory 3.1 vary from the values of the current output of the signal processing block 2, the obstacle is moving.

The block 3.3 for detection of imminent obstacle during the vehicle slow movement processes the information about the current position of the obstacle obtained from the signal processing block 2 and from the control unit 4.

The temporary deactivation block 3.4 processes the information about temporary deactivation of the automatic braking block 3.5 function from the control unit 4. Temporary deactivation of the automatic braking function, for example until the next start of the engine, is performed based on a command from the control unit 4, which generates such signal upon driver's request should he wish to temporarily deactivate the complete protection system function, for instance when the vehicle is moving in tall grass.

All these blocks transmit their outputs to the automatic braking block 3.5, which via the control unit 4 controls the braking circuit 5 and possibly also the vehicle engine 6.

The interconnecting block 3 has as its inputs the following signals.

The output of the block 2 processing the signal from the ultrasonic sensors 1, which contains the information about the position and distance of obstacles around the vehicle.

The output of the control unit 4, which contains the information about current wheel rotations. It is the output of so-called odometer. Based on this information, it is possible to evaluate whether the vehicle is moving and possibly in which direction.

The output of the control unit 4, which contains the information about temporary deactivation of the interconnecting block 3 function upon the driver's request, which the driver performs e.g. by pressing a pushbutton on the dashboard.

When the vehicle is moving, the interconnecting block 3 evaluates the following critical situations:
A. If the signal of the wheels rotation from the odometer indicates that the vehicle is not moving and simultaneously the signal from the block 2 processing the signal from the ultrasonic sensors 1 contains the information about an obstacle presence in the direction of possible movement, such signal is continuously compared in the block 3.2 for detection of moving obstacles with its previous values stored in the memory 3.1. If the block 3.2 for detection of moving obstacles evaluates that this signal changes in time, it means that the obstacle is moving and the automatic braking block 3.5 by its output transmits to the input 4.2 for controlling the braking circuit an information that the vehicle must not start moving in direction towards such moving obstacle.
B. If the signal of the wheels rotation from the odometer indicates that the vehicle moves slowly, for example with speed not exceeding 10km/h, the interconnecting block 3 evaluates in the block 3.3 for detection of imminent obstacle whether the distance of the obstacle is critical, for example 0.5m, and if the result of such evaluation is positive, it transmits again a signal to the input 4.2 for controlling the braking circuit to the control unit 4 to stop the vehicle immediately.

The interconnecting block 3 performs the operations described above only in case if the driver does not block its function manually via the control unit 4 by means of the signal "temporary deactivation" connected to the temporary deactivation block 3.4. The evaluation logic block represented by the automatic braking block 3.5 therefore activates the signal at the input 4.2 for controlling the braking circuit towards the control unit 4 if it receives an active signal from the block 3.2 for detection of moving obstacles or from the block 3.3 for detection of imminent obstacle during the vehicle slow movement, provided that simultaneously the signal from the temporary deactivation block 3.4 is inactive.

We may sum up that the principle of the proposed solution is the direct interconnection of the signal processing block 2, which evaluates signals from the ultrasonic sensors 1, with the vehicle control unit 4, which controls the braking circuit 5 and the vehicle engine 6. This direct interconnection is implemented by means of the interconnecting block 3 while its logic evaluates the states of the vehicle and situation in its vicinity and if necessary it automatically sends a command to stop the vehicle and possibly to turn off or disengage its engine 6.

### Industrial Applicability

The device may be used in passenger cars and trucks equipped with ultrasonic sensors for systems indicating an obstacle for the driver. Other vehicles can be equipped with such sensors additionally, of course. The device described above can be used for the increased safety of traffic, especially when reversing and during slow vehicle movement in environments where pedestrians are present, it means on parking lots, in underground garages, at construction sites and similar.

## Claims

1. A device for increased safety during slow vehicle movement consisting of the ultrasonic sensors (1) interconnected with the signal processing block (2), to which the block (7) of the optical and/or acoustic signaling is connected, and further comprising a control unit (4) for controlling the braking circuit (5) and the engine (6) **characterized by the fact that** the between the signal processing block (2) and the control unit (4) is inserted the interconnecting block (3) formed by the memory (3.1), the block (3.2) for detection of moving obstacles, the block (3.3) for detection of imminent obstacle during the vehicle slow movement, the temporary deactivation block (3.4), and the automatic braking block (3.5), and these blocks are interconnected in such a way that the output of the block (2) processing the signal from the ultrasonic sensors (1) is connected to the input of the memory (3.1), to the first input of the block (3.2) for detection of moving obstacles, and to the first input of the block (3.3) for detection of imminent obstacle during the vehicle slow movement, while the output of the memory (3.1) is connected to the second input of the block (3.2) for detection of moving obstacles, and the third input of the block (3.2) for detection of moving obstacles is connected to the output (4.1) of the information about the current wheels rotations from the control unit (4), which is simultaneously connected to the second input of the block (3.3) for detection of imminent obstacle during the vehicle slow movement, where the output of the block (3.2) for detection of moving obstacles is connected to the first input of the automatic braking block (3.5), while to its second input the output of the block (3.3) for detection of imminent obstacle during the vehicle slow movement is connected and to its third input the output of the temporary deactivation block (3.4) is connected, and its input is connected to the output (4.3) of the information about temporary deactivation of the interconnecting block (3) function from the control unit (4), while the output of the automatic braking block (3.5) is connected to the input (4.2) for controlling the braking circuit by the control unit (4).

## Patentansprüche

1. Einrichtung zur Erhöhung der Sicherheit beim Betrieb von Fahrzeugen beim Rangieren, umfassend Ultraschallsensoren (1), verbunden mit einem Block (2) der Signalverarbeitung, an dem ein Block (7) der optischen und/oder akustischen Signalisierung angeschlossen ist und weiterhin umfassend eine Steuereinheit (4) zur Steuerung vom Bremskreis (5) und Motor (6), **dadurch gekennzeichnet, dass** zwischen dem Block (2) der Signalverarbeitung und der Steuereinheit (4) ein Verbindungsblock (3) angeordnet ist, bestehend aus einem Speicher (3.1), Block (3.2) zur Bestimmung von Beweglichkeit der Hindernisse, Block (3.3) zur Bestimmung naher Hindernisse beim Rangieren, Block (3.4) zeitweiliger Ausschaltung und Block (3.5) automatischer Bremsung und diese Blöcke sind so verbunden, dass der Ausgang vom Block (2) der Signalverarbeitung zur Signalverarbeitung von Ultraschallsensoren (1) mit dem Eingang des Speichers (3.1), mit dem ersten Eingang vom Block (3.2) zur Bestimmung von Beweglichkeit der Hindernisse und mit dem ersten Eingang vom Block (3.3) zur Bestimmung naher Hindernisse beim Rangieren verbunden ist, der Ausgang des Speichers (3.1) ist mit dem zweiten Eingang vom Block (3.2) zur Bestimmung von Beweglichkeit der Hindernisse verbunden, dessen dritter Eingang mit dem Ausgang (4.1) Informationen über die momentane Umdrehungen der Räder von der Steuereinheit (4) verbunden ist, der gleichzeitig mit dem zweiten Eingang vom Block (3.3) zur Bestimmung naher Hindernisse beim Rangieren verbunden ist, wo der Ausgang vom Block (3.2) zur Bestimmung von Beweglichkeit der Hindernisse mit dem ersten Eingang vom Block (3.5) automatischer Bremsung verbunden ist, an dessen zweitem Eingang der Ausgang vom Block (3.3) zur Bestimmung naher Hindernisse beim Rangieren angeschlossen ist und an dessen drittem Eingang der Ausgang vom Block (3.4) zeitweiliger Ausschaltung angeschlossen ist, dessen Eingang mit dem Ausgang (4.3) Informationen über die zeitweilige Ausschaltung des Verbindungsblocks (3) von der Funktion der Steuereinheit (4) verbunden ist, wobei der Ausgang vom Block (3.5) automatischer Bremsung mit dem Eingang (4.2) zur Steuerung vom Bremskreis der Steuereinheit (4) verbunden ist.

## Revendications

1. Le dispositif pour l'amélioration de la sécurité des véhicules pendant le roulement contenant des capteurs ultrasoniques (1) liés avec le bloc (2) de traitement de signaux auquel est connecté le bloc (7) de signalisation optique et/ou acoustique et, en outre contenant l'unité centrale (4) pour la commande du circuit de freinage (5) et le moteur (6) **en se distinguant par le fait qu**'entre le bloc (2)de traitement de signaux et l'unité centrale (4) il est inséré un bloc d'interconnexion (3) créé par la mémoire (3.1), bloc (3.2) de détermination de la mobilité des obstacles, bloc (3.3) de détermination d'un obstacle proche pendant le roulement, bloc (3.4) de débrayage temporaire et bloc (3.5) de freinage automatique. Ces blocs sont interconnectés de façon que la sortie du bloc (2) le traitement de signaux pour le traitement de signaux des capteurs ultrasoniques (1)est interconnectée avec l'entrée de la mémoire (3.1), avec la première entrée du bloc (3.2) de détermination de la mobilité des obstacles et la première entrée du bloc (3.3) de la détermination d'un obstacle proche pendant le roulement, la sortie de la mémoire (3.1) est interconnectée avec la deuxième entrée du bloc (3.2) de détermination de la mobilité des obstacles, dont la troisième entrée est interconnectée avec la sortie (4.1) de l'information concernant le nombre de tours immédiat de l'unité centrale (4), qui est en même temps interconnectée avec l'autre entrée du bloc (3.3) de détermination d'un obstacle proche pendant le roulement où la sortie du bloc (3.2) de détermination de la mobilité des obstacles est interconnectée avec la première entrée du bloc (3.5) de freinage automatique à la seconde entrée de laquelle est connectée la sortie du bloc (3.3) de détermination d'un obstacle proche pendant le roulement et à la troisième entrée de laquelle est connectée la sortie du bloc (3.4) de débrayage immédiat avec la sortie connectée avec la sortie (4.3) de l'information du débrayage temporaire du bloc d'interconnexion (3)de la fonction de l'unité centrale (4), quand la sortie du bloc (3.5) de freinage automatique est connectée avec l'entrée (4.2) pour la commande du circuit de freinage de l'unité centrale (4).
